# EUROPÄISCHE PATENTSCHRIFT

(11) **EP 1 902 308 B1**
(45) Veröffentlichungstag und Bekanntmachung des Hinweises auf die Patenterteilung: **12.11.2008**
(21) Anmeldenummer: 06764070.6
(22) Anmeldetag: 05.07.2006
(51) Int. Cl.: G01N 21/88

(54) **VORRICHTUNG ZUR INSPEKTION EINER OBERFLÄCHE**
DEVICE FOR INSPECTING A SURFACE
APPAREIL POUR INSPECTER UNE SURFACE

(30) Priorität: 08.07.2005 DE 102005031957
(43) Veröffentlichungstag der Anmeldung: 26.03.2008
(73) Patentinhaber: Koenig & Bauer AG, 97080 Würzburg (DE)
(72) Erfinder: STÖBER, Bernd, Rüdiger, 33378 Rheda-Wiedenbrück (DE)
(74) Vertreter: Stiel, Jürgen
(86) Internationale Anmeldenummer: PCT/EP2006/063913
(87) Internationale Veröffentlichungsnummer: WO 2007/006706

(56) Entgegenhaltungen:
- EP-A- 0 537 513
- EP-A- 0 675 466
- DE-A1- 10 204 939
- DE-B3-1102004 014 54
- US-A- 4 791 493
- US-A- 5 936 353
- US-A- 6 061 121
- US-A1- 2005 002 069

## Beschreibung

Die Erfindung betrifft eine Vorrichtung zur Inspektion einer Oberfläche gemäß dem Oberbegriff des Anspruchs 1.

Die DE 102 04 939 A1 betrifft eine Vorrichtung zur Erzeugung von flächigem parallelen Licht, wobei eine optische Einrichtung zur Aufnahme des von einer zu inspizierenden Oberfläche reflektierten Lichts und ein mindestens zwei Lichtquellen aufweisendes Beleuchtungssystem vorgesehen sind, wobei die optische Einrichtung und das Beleuchtungssystem mit einer Steuereinheit verbunden sind, wobei die Lichtquellen in einem Abstand voneinander beabstandet angeordnet sind, wobei die Lichtquellen jeweils Licht in einen an der zu inspizierenden Oberfläche vorgesehenen Erfassungsbereich der optischen Einrichtung emittieren, wobei die optische Einrichtung auf die zu inspizierende Oberfläche gerichtet ist, wobei mindestens eine der im Abstand voneinander angeordneten Lichtquellen des Beleuchtungssystems jeweils in mehrere einzelne Lichtquellen unterteilt ist, wobei der Erfassungsbereich der optischen Einrichtung in einer Bewegungsebene der durch diesen Erfassungsbereich hindurchbewegten zu inspizierenden Oberfläche liegt, wobei sich der Abstand der Lichtquellen des Beleuchtungssystems in der Bewegungsrichtung der zu inspizierenden Oberfläche erstreckt, wobei die einzelnen Lichtquellen von mindestens einer dieser Lichtquellen quer zur Bewegungsrichtung der zu inspizierenden Oberfläche angeordnet sind.

Durch die DE 10 2004 014 541 B3 ist ein optisches System zur Erzeugung eines Beleuchtungsstreifens auf einer Oberfläche eines Materials bekannt, wobei zumindest ein Teil der Oberfläche des Materials reflektiv ist, wobei eine Relativbewegung zwischen der Oberfläche des Materials und dem Beleuchtungsstreifen vorgesehen ist, wobei eine Beleuchtungseinrichtung mit mehreren zeilenförmig nebeneinander in einem Abstand von der Oberfläche des Materials angeordneten, ihr Licht jeweils in einen Raumwinkel emittierenden Lichtquellen Licht zur Erzeugung des Beleuchtungsstreifens emittiert, wobei eine Erfassungseinrichtung mit mindestens einem in einem Abstand von der Oberfläche des Materials angeordneten Detektor von der Oberfläche des Materials remittiertes Licht erfasst, wobei der Beleuchtungsstreifen mit einer sich auf der Oberfläche des Materials orthogonal zu seiner Länge erstreckenden Breite ausgebildet ist.

Durch die DE 199 30 688 A1 ist eine Vorrichtung zur Inspektion einer Oberfläche bekannt, wobei ein Inspektionssystem mit einer optischen Einrichtung zur Aufnahme des von der zu inspizierenden Oberfläche reflektierten Lichts und mit einem mindestens zwei Lichtquellen aufweisenden Beleuchtungssystem vorgesehen ist, wobei die optische Einrichtung und das Beleuchtungssystem mit einer Steuereinheit verbunden sind, wobei die Lichtquellen in einem Abstand voneinander beabstandet angeordnet sind, wobei die Lichtquellen unter sich voneinander unterscheidenden Einfallswinkeln jeweils Licht in einen an der zu inspizierenden Oberfläche vorgesehenen Erfassungsbereich der optischen Einrichtung emittieren, wobei die optische Einrichtung unter einem Beobachtungswinkel auf die zu inspizierende Oberfläche gerichtet ist.

Durch die DE 41 23 916 A1 ist eine Vorrichtung zum beleuchtungsdynamischen Erkennen und Klassifizieren von Oberflächenmerkmalen eines Objektes bekannt, wobei mindestens eine der in einem Abstand voneinander angeordneten Lichtquellen eines Beleuchtungssystems jeweils in mehrere einzelne Lichtquellen unterteilt ist, wobei eine Steuereinheit mindestens zwei der im Abstand voneinander angeordneten Lichtquellen des Beleuchtungssystems und/oder die einzelnen Lichtquellen von mindestens einer der im Abstand voneinander angeordneten Lichtquellen jeweils wahlweise und unabhängig voneinander einstellt.

Die bevorzugte Anwendung betrifft insbesondere die Inspektion von Oberflächen mit uneinheitlich reflektiven Bereichen. Derartige Oberflächen mit uneinheitlich reflektiven Bereichen sind z. B. bei Oberflächen eines Bedruckstoffes von Druckprodukten bekannt. Beispielhaft sind hier Druckprodukte sowohl aus dem Wertpapierdruck als auch aus dem Verpackungsdruck, insbesondere dem Verpackungsdruck zur Herstellung hochwertiger Verpackungen, z. B. für Parfümerieartikel oder Genussmittel. Der Wertpapierdruck schließt die Herstellung u. a. von Banknoten, Postwertzeichen oder Dokumenten, wie z. B. Urkunden, Aktien, Schecks, amtlichen Ausweisen oder Pässen, ein. Druckprodukte mit uneinheitlich reflektiven Oberflächen werden z. B. in einem Sonderdruckverfahren hergestellt, wobei das Sonderdruckverfahren in einer Kombination bekannter Druckverfahren wie Offsetdruck, Tiefdruck oder Hochdruck bestehen kann.

Uneinheitlich reflektive Oberflächen dieser Druckprodukte entstehen z. B. dadurch, dass deren Bedruckstoff außer mit dem eigentlichen Druckmotiv mit mindestens einem besonderen optischen und/oder haptischen Merkmal ausgestattet ist, wobei auch das haptische Merkmal i. d. R. eine optische Wirkung aufweist. Das besondere Merkmal bildet z. B. ein die Produktechtheit bestätigendes und eine Fälschung des Druckproduktes erschwerendes Sicherheitsmerkmal. Das besondere Merkmal kann jedoch auch zur Ausbildung einer besonderen ästhetischen Anmutung dieses Druckproduktes vorgesehen sein. So kann auf der Oberfläche dieses Druckproduktes außer der aufgebrachten konventionellen Druckfarbe zusätzlich z. B. eine Spezialfarbe, z. B. eine OVI-Farbe (engl.: optical variable ink, dt.: optisch variable Farbe), ein Lack oder eine Folie appliziert sein.

Ein haptisches, d. h. ertastbares Merkmal ergibt sich z. B. dadurch, dass die Oberfläche des Druckproduktes eine reliefartige Struktur z. B. durch eine Prägung und/oder durch eine Dickenveränderung des Bedruckstoffes aufweist, oder dadurch, dass die Oberfläche des Druckproduktes z. B. eine (Mikro-) Perforation aufweist. Beispielsweise kann ein in den Bedruckstoff eingearbeitetes Wasserzeichen z. B. durch eine Variierung der Dicke des Bedruckstoffes ausgebildet sein. Derartige Oberflächenstrukturen führen dazu, dass auf diese Stellen der Oberfläche des Druckproduktes einfallendes Licht im Vergleich zu anderen Bereichen der Oberfläche dieses Druckproduktes anders oder unter Umständen auch gar nicht reflektiert wird.

Eine OVI-Farbe hat die Eigenschaft, dass sie ihren Farbeindruck je nach ihrem Betrachtungswinkel ändert, indem die Farbe z. B. von Purpurrot zu Olivgrün oder Braun wechselt, wobei dieser Effekt darauf beruht, dass einfallendes Licht an Pigmenten der OVI-Farbe gebrochen, gestreut oder reflektiert wird. Zu den Spezialfarben zählen u. a. auch fluoreszierende Druckfarben, die Pigmente enthalten, die z. B. im Dunklen oder nur beim Einfall von Licht einer bestimmten Wellenlänge, z. B. UV-Licht, leuchten. Ein optisch ähnlich wirkender Effekt wird z. B. auch dadurch hervorgerufen, dass dem Bedruckstoff Melierfasern beigemischt sind, die unter dem Einfall z. B. von UV-Licht in verschiedenen Farben leuchten.

Ein insbesondere nur auf einem Teil der Oberfläche des Druckproduktes aufgetragener Lack führt z. B. zu einem Glanzeffekt, wodurch das Reflexionsvermögen der Oberfläche dieses Druckproduktes gegenüber einem unlackierten Bereich der Oberfläche dieses Druckproduktes deutlich verändert wird. Ein Lack, z. B. ein transparenter Lack, kann einerseits einfallendes Licht wie eine metallische Oberfläche reflektieren, andererseits jedoch die Sichtbarkeit eines sich unterhalb des Lackes auf dem Bedruckstoff befindenden Druckmotivs je nach dem Einfallswinkel des einfallenden Lichtes erheblich einschränken. Einen besonderen Glanzeffekt weist auch ein z. B. auf einer Banknote als Sicherheitsmerkmal ausgebildeter, z. B. goldfarben schimmernder Glanzstreifen auf.

Auch kann an der Oberfläche des Druckproduktes mindestens ein Bereich mit einem im Vergleich zum Bedruckstoff anderen Werkstoff ausgebildet sein, wobei dieser andere Werkstoff ein gegenüber dem Bedruckstoff anderes Reflexionsvermögen aufweist. Derartige Bereiche sind z. B. durch mindestens ein Folienelement, z. B. aus einem Metall, z. B. aus Aluminium, oder aus einem Kunststoff, z. B. aus Polypropylen oder aus einem anderen festen Kunststoff, ausgebildet, wobei das Folienelement seinerseits z. B. ein Hologramm aufweisen kann. Auch ein Sicherheitsstreifen oder ein Sicherheitsfaden kann ein derartiges Element sein. Mitunter weist ein derartiges Folienelement seinerseits nochmals zumindest teilweise eine Mikrostrukturierung auf, um in einem Teilbereich dessen Reflexionseigenschaft gezielt zu verändern. Es ist daher ersichtlich, dass auch Folienelemente die Oberfläche des Druckproduktes hinsichtlich des Reflexionsvermögens uneinheitlich gestalten können.

Allen den zuvor beispielhaft erwähnten Ausgestaltungen des besonderen optischen und/oder haptischen Merkmals ist gemeinsam, dass sie eine besondere Herausforderung darstellen, wenn eines oder sogar mehrere unterschiedliche dieser Merkmale gleichzeitig zusammen mit dem übrigen auf einem Bedruckstoff aufgebrachten Druckmotiv einer Inspektion zur Beurteilung der Qualität des Druckproduktes zu unterziehen sind. Denn der Bedruckstoff selbst sowie die darauf zur Ausbildung des Druckmotivs aufgedruckte konventionelle Druckfarbe reflektieren einfallendes Licht aufgrund von deren unregelmäßigen und daher eher raueren Oberflächenbeschaffenheit i. d. R. jeweils diffus, also gestreut ohne ausgeprägte Vorzugsrichtung in einen größeren Raumwinkel, wohingegen z. B. ein in den Bedruckstoff eingebrachtes oder auf dessen Oberfläche aufgebrachtes metallisches oder metallisiertes Folienelement oder ein auf der Oberfläche des Bedruckstoffes aufgetragener Lack einfallendes Licht aufgrund von deren regelmäßigen und daher eher glatten Oberflächenbeschaffenheit i. d. R. jeweils in einer sich aus dem Reflexionsgesetz ergebenden Vorzugsrichtung reflektieren, wobei gemäß dem Reflexionsgesetz der Reflexionswinkel dem Winkel des einfallenden Lichtes entspricht und diese beiden Winkel sowie das auf die Oberfläche des Bedruckstoffes bezogene Einfallslot in derselben Ebene liegen.

Ein die Qualität eines Druckproduktes inspizierendes Inspektionssystem weist u. a. eine optische Einrichtung zur Aufnahme des von der zu inspizierenden Oberfläche reflektierten Lichts auf, vorzugsweise eine Bildaufnahmeeinheit, z. B. ein Kamerasystem, insbesondere ein Kamerasystem zur Aufnahme eines Farbbildes, sowie ein Beleuchtungssystem zur Beleuchtung der Oberfläche des Bedruckstoffes, zumindest zur Beleuchtung der uneinheitlich reflektiven Bereiche der Oberfläche dieses Bedruckstoffes. Ein derartiges Inspektionssystem ist z. B. in den Dokumenten DE 198 59 512 A1 oder DE 100 61 070 A1 beschrieben.

Die zuvor genannte Herausforderung in der Inspektion eines Druckproduktes mit auf der Oberfläche uneinheitlich reflektiven Bereichen ergibt sich dadurch, dass die Inspizierbarkeit uneinheitlich reflektiver Bereiche nur unter einer an das Reflexionsvermögen der jeweiligen Oberfläche angepassten Winkellage zwischen dem Kamerasystem und dem Beleuchtungssystem optimal ist.

Der Erfindung liegt die Aufgabe zugrunde, eine Vorrichtung zur Inspektion einer Oberfläche zu schaffen, wobei diese Vorrichtung geeignet ist, eine im Erfassungsbereich des Inspektionssystems bewegte Oberfläche mit Bereichen unterschiedlichen Reflexionsverhaltens hinsichtlich ihrer Qualität zu beurteilen.

Die Aufgabe wird erfindungsgemäß durch die Merkmale des Anspruchs 1 gelöst.

Die mit der Erfindung erzielbaren Vorteile bestehen insbesondere darin, dass mit einem einzigen Kamerasystem und einem einzigen Beleuchtungssystem während ihrer Inspektion bewegte Druckprodukte mit uneinheitlich reflektiven Oberflächenbereichen zuverlässig und in hoher Güte inspiziert werden können. Das Kamerasystem und das Beleuchtungssystem des Inspektionssystems sind und bleiben zur Inspektion von Bedruckstoffen mit unterschiedlich reflektiven Oberflächen in einer festen Winkellage zueinander angeordnet, denn bei der gefundenen Lösung bedarf es zur Inspektion von Oberflächen mit unterschiedlichem Reflexionsverhalten keiner Änderung der Winkellage zwischen dem Kamerasystem und dem Beleuchtungssystem. Das Inspektionssystem ist ohne jede mechanische Veränderung, d. h. ohne eine durch eine mechanische Verstellung ausgeführte Veränderung der Winkellage zwischen dem Kamerasystem und dem Beleuchtungssystem, allein durch eine Veränderung in der vorzugsweise elektronischen Steuerung des Beleuchtungssystems an die Inspektion von Oberflächen mit unterschiedlichem Reflexionsverhalten adaptierbar.

Aus der durch die Steuerung des Beleuchtungssystems gewonnenen Unabhängigkeit von der Winkellage zwischen dem Kamerasystem und dem Beleuchtungssystem ergeben sich insbesondere Vorteile in der Verwendung des vorgeschlagenen Inspektionssystems in einer Druckmaschine, insbesondere zur Durchführung einer Inline-Inspektion, wobei in der Druckmaschine produzierte Druckprodukte im laufenden Produktionsprozess hinsichtlich ihrer Qualität in Echtzeit beurteilt werden, wobei die Druckprodukte im Verlauf einer hinsichtlich des Inspektionssystems erfolgenden Relativbewegung inspiziert werden, wobei die Relativbewegung i. d. R. darin besteht, dass der Bedruckstoff während seiner Inspektion mit hoher Geschwindigkeit durch einen Erfassungsbereich des Kamerasystems des in der Druckmaschine ortsfest angeordneten Inspektionssystems hindurchbewegt wird. Die Inspektion des gesamten Bedruckstoffes mit all seinen unterschiedlich reflektiven Oberflächenbereichen kann mit der gefundenen Lösung erfolgen, ohne dass dort in der Druckmaschine vielfältige, den Produktionsprozess beeinträchtigende Anpassvorgänge erforderlich sind, d. h. ohne dass mechanische, apparative Einstellungen zu verändern sind. Die Schaffung unterschiedlicher Beleuchtungssituationen, die für die beabsichtigte Inspektion eines bestimmten Prüflings erforderlich sind, wird auf die Ebene der vorzugsweise elektronischen, programmgestützten Steuerung des Inspektionssystems verlagert, wodurch das Inspektionssystem auf einfache Weise an den vorgesehenen Prüfling adaptierbar wird.

Ein Ausführungsbeispiel der Erfindung ist in den Zeichnungen dargestellt und wird im Folgenden näher beschrieben, wodurch weitere Vorteile deutlich werden.

Es zeigen
- Fig. 1: in einer schematischen Darstellung ein Inspektionssystem mit einem eine Kamera aufweisenden Kamerasystem und mit einem zwei Lichtquellen aufweisenden Beleuchtungssystem;
- Fig. 2: in einer schematischen Darstellung ein Inspektionssystem mit einem zwei Kameras aufweisenden Kamerasystem und mit einem zwei Lichtquellen aufweisenden Beleuchtungssystem;
- Fig. 3: eine Anordnung des Inspektionssystems der Fig. 1 oder 2 in einer ausschnittsweise dargestellten Druckmaschine;
- Fig. 4: in einer schematischen Darstellung eine Aufteilung einer ersten und einer zweiten Lichtquelle des Beleuchtungssystems jeweils in mehrere einzelne Lichtquellen.

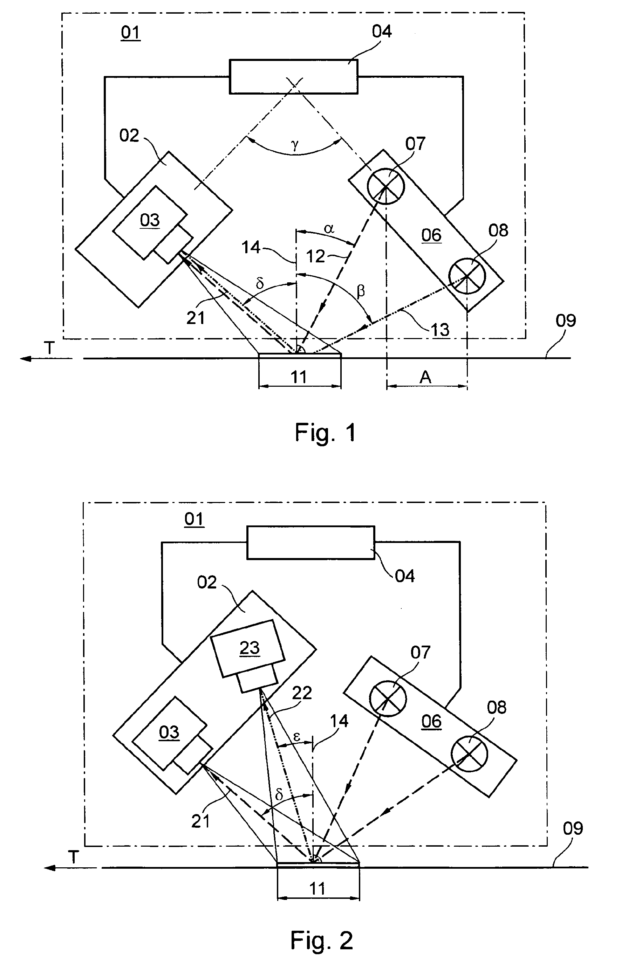

Fig. 1 zeigt beispielhaft in einer Prinzipskizze ein Inspektionssystem 01 mit einer optischen Einrichtung 02 zur Aufnahme des von einer zu inspizierenden Oberfläche reflektierten Lichts und mit einem mindestens zwei Lichtquellen 07; 08 aufweisenden Beleuchtungssystem 06, wobei die optische Einrichtung 02 und das Beleuchtungssystem 06 mit einer Steuereinheit 04 verbunden sind. Die optische Einrichtung 02 ist vorzugsweise als ein mindestens eine Kamera 03 aufweisendes Kamerasystem 02 ausgebildet.

Eine zu inspizierende Oberfläche, vorzugsweise die Oberfläche eines qualitätsmäßig zu beurteilenden Bedruckstoffes 09, z. B. eines Bogens 09 oder einer Materialbahn 09, insbesondere einer Papierbahn 09, wird relativ zu dem Inspektionssystem 01 durch einen in einer Transportebene des Bedruckstoffes 09 liegenden, sich in der Bewegungsrichtung T, d. h. in der Transportrichtung T erstreckenden Erfassungsbereich 11 der Kamera 03 des Kamerasystems 02 vorzugsweise gleichförmig hindurchbewegt, wobei die Bewegungsgeschwindigkeit der zu inspizierenden Oberfläche, d. h. hier die Transportgeschwindigkeit des Bedruckstoffes 09 z. B. 18.000 Bogen pro Stunde oder im Fall eines bahnförmigen Bedruckstoffes 09 12 m/s oder jeweils noch höhere Geschwindigkeiten betragen kann.

Die zu inspizierende Oberfläche, d. h. die Oberfläche des Bedruckstoffes 09 weist zumindest an seiner dem Inspektionssystem 01 zugewandten Seite zumindest ein Motiv, z. B. ein appliziertes Bildmotiv, insbesondere ein Druckmotiv sowie zusätzlich zumindest ein besonderes Merkmal auf, wobei sich das Druckmotiv und das besondere Merkmal in ihrer jeweiligen optischen Wirkung, d. h. insbesondere in ihrem Reflexionsverhalten, voneinander unterscheiden und somit auf der zu inspizierenden Oberfläche uneinheitlich reflektive Bereiche ausbilden. Von den Lichtquellen 07; 08 des Beleuchtungssystems 06 emittiertes und im Erfassungsbereich 11 der Kamera 03 des Kamerasystems 02 einfallendes Licht (in den Figuren 1 und 2 durch einen jeweiligen Zentralstrahl 12; 13 jeweils nur angedeutet) wird demzufolge von den am Bedruckstoff 09 uneinheitlich reflektiv ausgebildeten Oberflächen unterschiedlich remittiert. So können beispielsweise das Druckfarbe aufweisende Druckmotiv sowie der Bedruckstoff 09 an seinen z. B. zum Druckmotiv benachbarten unbedruckten Stellen aufgrund von deren jeweiligen Oberflächenbeschaffenheit von den Lichtquellen 07; 08 emittiertes und im Erfassungsbereich 11 einfallendes Licht diffus remittieren, wohingegen das mindestens eine zusätzliche Merkmal dasselbe einfallende Licht aufgrund seiner Oberflächenbeschaffenheit z. B. spiegelnd, d. h. in einer bestimmten Vorzugsrichtung reflektiert.

Die Kamera 03 des Kamerasystems 02 ist z. B. als eine Farbkamera 03 ausgebildet, vorzugsweise als eine mindestens einen CCD-Chip aufweisende Halbleiterkamera 03, insbesondere als eine Zeilenkamera 03, wobei lichtempfindliche Sensoren der Zeilenkamera 03 zeilenförmig quer zur Transportrichtung T des Bedruckstoffes 09 angeordnet sind, sodass die Oberfläche des relativ zum Inspektionssystem 01 bewegten Bedruckstoffes 09 in Korrelation zu dessen Transportgeschwindigkeit fortschreitend zeilenweise gescannt wird. Die vollständige Bildaufnahme eines Druckmotivs oder eines besonderen Merkmals auf dem Bedruckstoff 09 erfordert bei der Verwendung einer Zeilenkamera 03 i. d. R. die Erfassung einer Vielzahl von sequentiell aufgenommenen Bildzeilen, wobei jede Bildzeile einen Ausschnitt des Druckmotivs oder des besonderen Merkmals erfasst.

Die Lichtquellen 07; 08 des Beleuchtungssystems 06 sind in Transportrichtung T des Bedruckstoffes 09 in einem Abstand A zueinander versetzt angeordnet, sodass von ihnen emittiertes Licht unter sich voneinander unterscheidenden Einfallswinkeln α; β in den Erfassungsbereich 11 der Kamera 03 des Kamerasystems 02 einfällt, wobei jeder der Einfallswinkel α; β jeweils von einem von einer der Lichtquellen 07; 08 ausgehenden Zentralstrahl 12; 13 zu einem im Erfassungsbereich 11 lotrecht auf der zu inspizierenden Oberfläche, d. h auf dem Bedruckstoff 09 stehenden Einfallslot 14 bemessen ist. Da von den Lichtquellen 07; 08 emittiertes Licht unter unterschiedlichen Einfallswinkeln α; β in den Erfassungsbereich 11 der Kamera 03 des Kamerasystems 02 einfällt, können mit jeder dieser Lichtquellen 07; 08 andere, d. h. sich im Reflexionsverhalten jeweils unterscheidende Oberflächenbereiche des Bedruckstoffes 09 hervorgehoben werden. Vorzugsweise ist jedoch zumindest eine der Lichtquellen 07; 08 unter einem derartigen Einfallswinkel α; β angeordnet, dass von dieser Lichtquelle 07; 08 emittiertes Licht aus dem Erfassungsbereich 11 gemäß der Bedingung "Einfallswinkel ist gleich Ausfallswinkel" zur Kamera 03 remittiert wird. Mit Hilfe dieser Lichtquelle 07; 08 sind insbesondere reflektive Merkmale des Bedruckstoffes 09 gut sichtbar und damit inspizierbar. Die Kamera 03 des Kamerasystems 02 ist unter einem Beobachtungswinkel δ auf die Oberfläche des Bedruckstoffes 09 gerichtet, wobei der Beobachtungswinkel δ zwischen einem vom Erfassungsbereich 11 zur Kamera 03 gerichteten Zentralstrahl 21 und dem lotrecht auf dem Bedruckstoff 09 stehenden Einfallslot 14 bemessen ist. Die Einfallswinkel α; β und/oder der Beobachtungswinkel δ sind jeweils vorzugsweise spitzwinklig, d. h. kleiner als 90° ausgebildet. Das Inspektionssystem 01 arbeitet bevorzugt in einem Auflichtverfahren. Die in Transportrichtung T des Bedruckstoffes 09 in dem Abstand A voneinander beabstandet angeordneten Lichtquellen 07; 08 des Beleuchtungssystems 06 weisen vorzugsweise dieselbe Lichtfarbe auf bzw. lassen in den Erfassungsbereich 11 Licht derselben Lichtfarbe einfallen.

Die Lichtquellen 07; 08 des Beleuchtungssystems 06 sind vorzugsweise als lichtstarke Leuchtdioden (LED) oder Laserdioden ausgebildet, die ihr Licht jeweils gebündelt und gezielt in eine zum Erfassungsbereich 11 gerichtete Vorzugsrichtung abgeben. Weitere optische Einrichtungen (nicht dargestellt), wie Linsen- und/oder Spiegelanordnungen, können die Richtungshomogenität des von den Lichtquellen 07; 08 emittierten Lichts unterstützen, wobei diese weiteren optischen Einrichtungen zur Erzielung eines kompakten Gesamtaufbaus in dem Beleuchtungssystem 06 vorzugsweise integriert angeordnet sind.

Das Kamerasystem 02 und das Beleuchtungssystem 06 befinden sich im Inspektionssystem 01 in einer fest definierten Anordnung zueinander, insbesondere sind sie in einem festen Winkel γ zueinander angeordnet, wobei der Winkel γ zumindest während einer Inspektion des Bedruckstoffes 09 mit den uneinheitlich reflektiven Oberflächen unverändert bleibt. Beispielsweise sind sowohl das Kamerasystem 02 als auch das Beleuchtungssystem 06 in einer Druckmaschine 16, z. B. in einer Rotationsdruckmaschine 16, vorzugsweise in einer Bogendruckmaschine 16, fest verbaut.

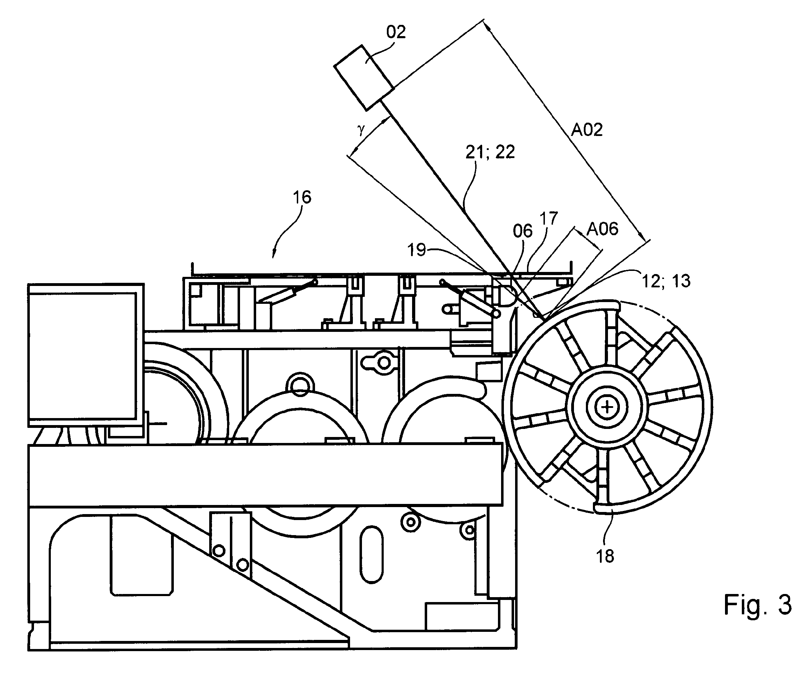

Fig. 3 zeigt beispielhaft eine nur in einem Ausschnitt dargestellte Bogendruckmaschine 16 mit eine in den Fig. 1 und 2 dargestellten Inspektionssystem 01, wobei dessen Beleuchtungssystem 06 z. B. unterhalb eines Fußtrittes 17 angeordnet ist, wobei das Beleuchtungssystem 06 Licht in Richtung eines Zylinders 18, z. B. eines Druckwerkzylinders 18, z. B. eines Gegendruckzylinders 18, emittiert, wobei von der Oberfläche eines auf dem Gegendruckzylinder 18 gehaltenen und durch eine Rotation des Gegendruckzylinders 18 transportierten Bedruckstoffes 09 (nicht dargestellt) remittiertes Licht durch eine spaltförmige Öffnung 19 im Fußtritt 17 tritt und von einem Kamerasystem 02 des Inspektionssystems 01 erfasst wird, wobei das Kamerasystem 02 z. B. in einem Abstand A02 und das Beleuchtungssystem 06 z. B. in einem Abstand A06 jeweils vom Gegendruckzylinder 18 angeordnet sind. Der Abstand A02 des Kamerasystems 02 liegt im Bereich zwischen 10 mm und 2.000 mm, vorzugsweise zwischen 50 mm und 400 mm. Der Abstand A06 des Beleuchtungssystems 06 liegt vorzugsweise zwischen 30 mm und 200 mm, insbesondere zwischen 80 mm und 140 mm. Die Abstände A02 und A06 sind vorzugsweise fest eingestellt und sollen zumindest während der Inspektion in einer laufenden Produktion der Druckmaschine 16 nicht verändert werden. Das Kamerasystem 02 und das Beleuchtungssystem 06 weisen zueinander einen gleichfalls vorzugsweise fest eingestellten Winkel γ auf, wobei dieser Winkel γ vorzugsweise spitzwinklig oder in etwa rechtwinklig ausgebildet ist.

Die Steuereinheit 04 steuert mindestens zwei in Transportrichtung T des Bedruckstoffes 09 im Abstand A zueinander versetzt angeordnete Lichtquellen 07; 08 des Beleuchtungssystems 06 voneinander getrennt, d. h. einzeln und unabhängig voneinander an. Die Steuereinheit 04 stellt z. B. einen Einschaltzeitpunkt der Lichtquellen 07; 08, deren Einschaltdauer sowie deren jeweilige Helligkeit ein. Durch unterschiedlich hell eingestellte Lichtquellen 07; 08 kann ein Kontrast zwischen reflektiven und diffus reflektierenden Merkmalen gezielt eingestellt werden, wodurch eine Anpassung an den jeweiligen gerade aktuell in der Druckmaschine 16 abzuarbeitenden Druckauftrag erfolgen kann. Durch die mittels der Ansteuerung durch die Steuereinheit 04 getroffene Auswahl einer unter einem bestimmten Einfallswinkel α; β angeordneten Lichtquelle 07; 08 des Beleuchtungssystems 06 kann auch der Kontrast zwischen einem nur unter einer speziellen Winkelbedingung reflektierenden Merkmal und seiner Umgebung eingestellt werden, denn je nach dem Reflexionsvermögen des Merkmals tritt es entweder durch relativ flach einfallendes Streiflicht oder unter einem dem Einfallslot 14 nahen Winkel in seiner Sichtbarkeit stärker hervor.

Die Steuereinheit 04 kann den Einschaltzeitpunkt bestimmter, ausgewählter Lichtquellen 07; 08 z. B. in Abhängigkeit von der Transportgeschwindigkeit des Bedruckstoffes 09 oder einer Winkellage des den Bedruckstoff 09 transportierenden Zylinders 18, insbesondere des Gegendruckzylinders 18, steuern, wobei jeweils z. B. der Erfassungsbereich 11 der Kamera 03 des Kamerasystems 02 einen Bezugspunkt bildet, d. h. die Lichtquellen 07; 08 werden von der Steuereinheit 04 stets z. B. bei einer bestimmten, mit dem Erfassungsbereich 11 der Kamera 03 korrelierenden Winkellage des den Bedruckstoff 09 transportierenden Gegendruckzylinders 18 oder in Abhängigkeit von der Transportgeschwindigkeit des Bedruckstoffes 09 nach festgelegten, vom Bedruckstoff 09 zurückgelegten Strecken eingeschaltet. Die von oder mittels der Steuereinheit 04 getroffene Auswahl kann wiederum z. B. von dem aktuell in der Druckmaschine 16 abzuarbeitenden Druckauftrag abhängig sein. Diese Option ist vorteilhaft bei einem Druckmotiv oder einem besonderen Merkmal anwendbar, welches jeweils in einer starren Folge, z. B. in einem festen Abstand, wiederkehrt, z. B. nach jeder vollständigen oder halben Umdrehung des den Bedruckstoff 09 transportierenden Gegendruckzylinders 18. Die Lichtquellen 07; 08 werden von der Steuereinheit 04 vorzugsweise dann wieder abgeschaltet, nachdem das zu erfassende Druckmotiv oder besondere Merkmal den Erfassungsbereich 11 der Kamera 03 des Kamerasystems 02 in Gänze durchlaufen hat, d. h. nachdem das zu erfassende Druckmotiv oder besondere Merkmal von der Kamera 03 des Kamerasystems 02 vollständig erfasst worden ist.

Durch eine Steuerung des jeweiligen Einschaltzeitpunktes und der jeweiligen Einschaltdauer bestimmter ausgewählter Lichtquellen 07; 08 kann das Beleuchtungssystem 06 an das jeweilige Reflexionsverhalten des zu erfassenden Druckmotivs und/oder des zu erfassenden besonderen Merkmals in vorteilhafter Weise angepasst werden. Des Weiteren kann der jeweilige Einschaltzeitpunkt und die jeweilige Einschaltdauer mindestens einer bestimmten ausgewählten Lichtquelle 07; 08 selektiv hinsichtlich eines bestimmten zu erfassenden Druckmotivs oder besonderen Merkmals eingestellt werden, wobei dieses zu erfassende Druckmotiv oder zu erfassende besondere Merkmal jeweils zusammen mit anderen Druckmotiven oder anderen besonderen Merkmalen im selben Durchlauf des Bedruckstoffes 09 durch den Erfassungsbereich 11 von der Kamera 03 des Kamerasystems 02 zu erfassen ist.

Mit der zuvor geschilderten, auf das zu erfassende Druckmotiv oder zu erfassende besondere Merkmal abgestimmten Steuerung der Lichtquellen 07; 08 des Beleuchtungssystems 06 können auch OVI-Farben für eine Kamera 03 des Kamerasystems 02 erkennbar gemacht werden, weil unter verschiedenen, sich insbesondere im Einfallswinkel α; β der jeweiligen Lichtquellen 07; 08 unterscheidenden Beleuchtungssituationen ein Farbumschlag von OVI-Farben hervorgerufen werden kann, welcher seinerseits dann vom Inspektionssystem 01 feststellbar ist.

Insbesondere in einer Ausgestaltung des Inspektionssystems 01, in welcher die Kamera 03 von dessen Kamerasystem 02 als eine Zeilenkamera 03 ausgebildet ist, kann vorgesehen sein, dass die Steuereinheit 04 die Lichtquellen 07; 08 des Beleuchtungssystems 06 zwischen zwei aufeinanderfolgenden von der Zeilenkamera 03 aufgenommenen Bildzeilen umschaltet. Die Schaltzeiten der Lichtquellen 07; 08 des Beleuchtungssystems 06 liegen dabei deutlich unterhalb des Zeilentaktes der Zeilenkamera 03. Wenn z. B. mit zwei Lichtquellen 07; 08 des Beleuchtungssystems 06, die sich in ihrem jeweiligen Einfallswinkel α; β unterscheiden, zwei unterschiedliche Beleuchtungssituationen im Erfassungsbereich 11 der Kamera 03 des Kamerasystems 02 einzustellen sind, müssen diese Lichtquellen 07; 08 nacheinander ein- und wieder ausgeschaltet werden, bevor der Bedruckstoff 09 in seiner Transportrichtung T in Abhängigkeit von seiner Transportgeschwindigkeit eine Strecke zurückgelegt hat, die der halben Erstreckung des Erfassungsbereiches 11 in der Transportrichtung T des Bedruckstoffes 09 entspricht, wobei in diesem Beispiel angenommen wird, dass eine Bildzeile der Zeilenkamera 03 den Erfassungsbereich 11 in seiner in Transportrichtung T des Bedruckstoffes 09 gerichteten Erstreckung vollständig erfasst. Wenn ein mit der jeweils halben Erstreckung des Erfassungsbereiches 11 korrespondierender Ausschnitt des Bedruckstoffes 09 unter den beiden unterschiedlichen Beleuchtungssituationen von der Zeilenkamera 03 erfasst werden soll, muss die Zeilenkamera 03 einen Zeilentakt aufweisen, der es erlaubt, eine mit der Erstreckung des Erfassungsbereiches 11 korrespondierende Bildzeile zweimal auszulesen, und zwar jeweils einmal, nachdem der Bedruckstoff 09 in seiner Transportrichtung T in Abhängigkeit von seiner Transportgeschwindigkeit die Strecke zurückgelegt hat, die der halben Erstreckung des Erfassungsbereiches 11 in der Transportrichtung T des Bedruckstoffes 09 entspricht. Sollen mehr als zwei Teilbilder jeweils unter verschiedenen Beleuchtungssituationen aufgenommen werden, während der Bedruckstoff 09 den Erfassungsbereich 11 durchläuft, sind entsprechend der Anzahl der aufzunehmenden Teilbilder auch mehrere Lichtquellen 07; 08 des Beleuchtungssystems 06 hinsichtlich zumindest ihres jeweiligen Einschaltzeitpunktes und ihrer jeweiligen Einschaltdauer von der Steuereinheit 04 einzustellen, wobei diese Lichtquellen 07; 08 ihr Licht jeweils unter voneinander verschiedenen Einfallswinkeln α; β in den Erfassungsbereich 11 einfallen lassen, wobei gleichfalls der Zeilentakt der Zeilenkamera 03 entsprechend der Anzahl der aufzunehmenden Teilbilder erhöht wird. Es ist ersichtlich, dass zur Realisierung dieser Funktion in Anbetracht der bevorzugten hohen Transportgeschwindigkeit des Bedruckstoffes 09 für das Beleuchtungssystem 06 sehr schnell schaltbare Lichtquellen 07; 08 sowie eine Zeilenkamera 03 mit einem hohen Zeilentakt benötigt werden. Die Steuereinheit 04 wertet dann die jeweils unter unterschiedlichen Beleuchtungssituationen von der Zeilen kamera 03 in deren Erfassungsbereich 11 erfassten Teilbilder hinsichtlich in ihrem jeweiligen Reflexionsverhalten unterschiedlicher Merkmale des Druckproduktes aus. Die von der Zeilen kamera 03 optisch abgebildete Zeilenhöhe entspricht dabei jeweils z. B. derjenigen Strecke, die der Bedruckstoff 09 zwischen den mindestens zwei Zeilentakten der Zeilenkamera 03 zurücklegt, sodass mindestens zwei zueinander verschobene lückenlose Abbilder der Oberfläche des Bedruckstoffes 09 aus den aufeinander folgenden Bildzeilen durch eine alternierende Zuordnung extrahierbar sind.

Zur Inspektion sehr komplexer Druckprodukte kann die Zahl der sicher inspizierbaren Merkmale nicht nur durch eine Erhöhung der Anzahl der Lichtquellen 07; 08 des Beleuchtungssystems 06, sondern auch durch eine Ergänzung des Inspektionssystems 01 um mindestens einen weiteren Beobachtungswinkel δ; ε und damit um mindestens eine weitere Kamera 23 erhöht werden, wie es die Fig. 2 darstellt. In der Fig. 2 ist beispielhaft in einer schematischen Darstellung ein Inspektionssystem 01 mit einem zwei Kameras 03; 23 aufweisenden Kamerasystem 02 und mit einem zwei Lichtquellen 07; 08 aufweisenden Beleuchtungssystem 06 dargestellt, wobei eine Kamera 03 den Beobachtungswinkel δ und die andere Kamera 23, z. B. gleichfalls eine Zeilenkamera 23 bzw. Farbzeilenkamera 23, einen zwischen einem vom Erfassungsbereich 11 zu dieser Kamera 23 gerichteten Zentralstrahl 22 und dem lotrecht auf dem Bedruckstoff 09 stehenden Einfallslot 14 bemessenen Beobachtungswinkel ε aufweist, wobei beide Beobachtungswinkel δ; ε voneinander verschieden sind. Beide Kameras 03; 23 weisen einen in der Bewegungsebene der zu inspizierenden Oberfläche, d. h. in der Transportebene des Bedruckstoffes 09 liegenden, sich in dessen Bewegungsrichtung T bzw. Transportrichtung T erstreckenden, vorzugsweise gleichen Erfassungsbereich 11 auf, was in der Fig. 2 durch Linien beidseitig des jeweiligen Zentralstrahls 21; 22 angedeutet ist. Im Übrigen kann das in der Fig. 2 dargestellte Inspektionssystem 01 auch alle Merkmale des in Verbindung mit der Fig. 1 erläuterten Inspektionssystems 01 aufweisen.

Eine weitere Variante zur Ausgestaltung des Beleuchtungssystems 06 sieht vor, eine oder mehrere der in den Fig. 1 und 2 beispielhaft dargestellten Lichtquellen 07; 08 quer zur Bewegungsrichtung T der zu inspizierenden Oberfläche bzw. der Transportrichtung T des Bedruckstoffes 09 vorzugsweise jeweils in mehrere, von der Steuereinheit 04 z. B. einzeln steuerbare Lichtquellen 071 bis 077 und/oder 081 bis 087 zu unterteilen. Mit dieser Anordnung der Lichtquellen 071 bis 077 und/oder 081 bis 087 lässt sich mit der Steuereinheit 04 zusätzlich auch quer zur Transportrichtung T des Bedruckstoffes 09 ein Lichtprofil einstellen.

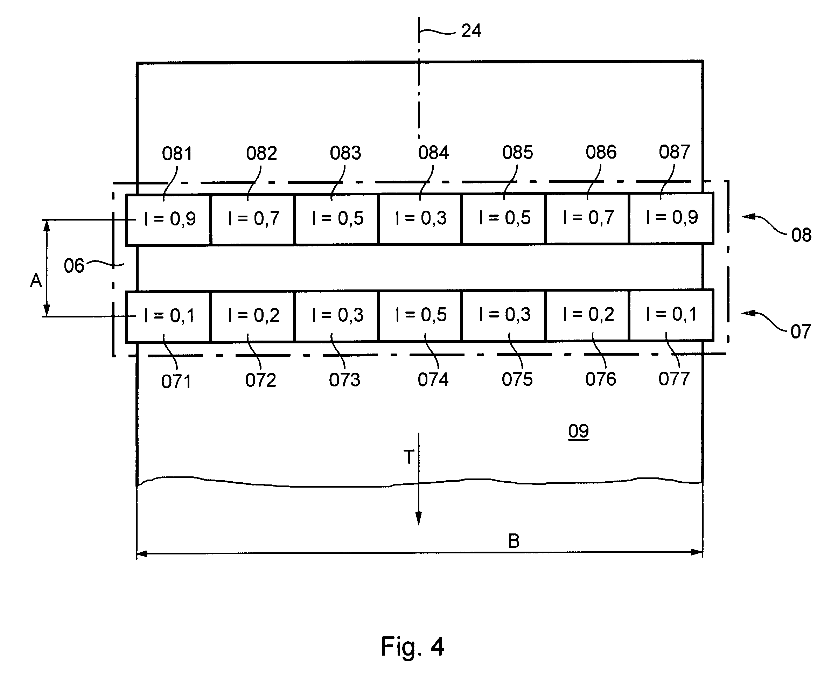

Fig. 4 zeigt beispielhaft in einer schematischen Darstellung in einer Draufsicht eine Aufteilung sowohl der ersten Lichtquelle 07 des Beleuchtungssystems 06 in mehrere, z. B. sieben aneinandergereihte, einzeln steuerbare Lichtquellen 071 bis 077 als auch eine Aufteilung der weiteren, zweiten Lichtquelle 08 des Beleuchtungssystems 06 in mehrere, ebenfalls z. B. sieben aneinandergereihte, einzeln steuerbare Lichtquellen 081 bis 087, wobei von diesen in Transportrichtung T des Bedruckstoffes 09 im Abstand A voneinander beabstandeten Reihen der Lichtquellen 07; 08 emittiertes Licht jeweils unter voneinander verschiedenen Einfallswinkeln α; β in den Erfassungsbereich 11 der Kamera 03 des Kamerasystems 02 an der Oberfläche des Bedruckstoffes 09 einfällt, wobei die einzelnen, jeweils zu einer der Lichtquellen 07; 08 gehörenden Lichtquellen 071 bis 077 und/oder 081 bis 087 jeweils quer zur Transportrichtung T des Bedruckstoffes 09, d. h. entlang von dessen Breite B, angeordnet sind.

Die Lichtquellen 071 bis 077 und/oder 081 bis 087 sind vorzugsweise jeweils zur Ausbildung einer Linienbeleuchtung 07; 08 aneinandergereiht, wobei jede dieser Linienbeleuchtungen 07; 08 sich vorzugsweise über die gesamte Breite B des Bedruckstoffes 09 oder sogar noch darüber hinaus erstreckt. Die einzelnen Lichtquellen 071 bis 077 und/oder 081 bis 087 der jeweiligen Linienbeleuchtung 07; 08 sind hinsichtlich einer den Bedruckstoff 09 in dessen Transportrichtung T durchlaufenden Symmetrielinie 24 vorzugsweise jeweils symmetrisch angeordnet, d. h. zu beiden Seiten der Symmetrielinie 24 ist vorzugsweise jeweils eine gleiche Anzahl von einzelnen Lichtquellen 071 bis 077 und/oder 081 bis 087 angeordnet. Die Linienbeleuchtungen 07; 08 können quer zur Transportrichtung T des Bedruckstoffes 09 auch eine sich voneinander unterscheidende Anzahl von einzelnen Lichtquellen 071 bis 077 und/oder 081 bis 087 aufweisen. Aufgrund des unter voneinander verschiedenen Einfallswinkeln α; β in den Erfassungsbereich 11 emittierten Lichtes kann eine der Linienbeleuchtungen 07; 08 vorzugsweise reflektive Merkmale an zu beleuchtenden Oberflächen des Bedruckstoffes 09 hervorheben, wohingegen sich die andere Linienbeleuchtung 07; 08 z. B. eher zur Sichtbarmachung matter, diffus reflektierender Merkmale an der Oberfläche des Bedruckstoffes 09 eignet.

Jede der einzelnen Lichtquellen 071 bis 077 und/oder 081 bis 087 kann z. B. als eine einzelne oder als eine Gruppe von mehreren lichtstarken Leuchtdioden (LED) oder Laserdioden ausgebildet sein. Jede der einzelnen Lichtquellen 071 bis 077 und/oder 081 bis 087 ist z. B. in ihrer jeweiligen Helligkeit von der Steuereinheit 04 vorzugsweise kontinuierlich einstellbar. Eine mit der Helligkeit der einzelnen Lichtquellen 071 bis 077 und/oder 081 bis 087 korrespondierende Intensität I, z. B. ein Strom, eine Spannung oder ein Taktverhältnis zum Betrieb der Lichtquellen 071 bis 077 und/oder 081 bis 087, ist z. B. auf einen Wert zwischen 0 und 1 einstellbar, entsprechend Null für keine Intensität I, d. h. den kein Licht emittierenden, ausgeschalteten Zustand der Lichtquellen 071 bis 077 und/oder 081 bis 087, und Eins für die volle, d. h. einhundertprozentige, maximale Intensität I. Jede der einzelnen Lichtquellen 071 bis 077 und/oder 081 bis 087 ist von der Steuereinheit 04 vorzugsweise einzeln in ihrer jeweiligen Intensität I einstellbar. Eingestellte Werte der Intensität I für jede der einzelnen Lichtquellen 071 bis 077 und/oder 081 bis 087 der Linienbeleuchtungen 07; 08 sind in der Fig. 4 beispielhaft dargestellt.

Zur Vermeidung einer hohen Anzahl von Steuerleitungen zwischen der Steuereinheit 04 und den Lichtquellen 07; 08 des Beleuchtungssystems 06 ist es vorteilhaft, unter den einzelnen Lichtquellen 071 bis 077 und/oder 081 bis 087 Gruppen zu bilden und alle zu einer dieser Gruppen gehörenden einzelnen Lichtquellen 071 bis 077 und/oder 081 bis 087 gemeinsam mit derselben Steuerleitung anzusteuern. In der Fig. 4 ist beispielhaft dargestellt, zu beiden Seiten der Symmetrielinie 24 symmetrisch angeordnete einzelne Lichtquellen 071 bis 077 und/oder 081 bis 087 jeweils auf dieselbe Intensität I einzustellen und vorzugsweise gemeinsam anzusteuern.

Die am Kamerasystem 02 des Inspektionssystems 01 beteiligten Kameras 03; 23 weisen vorzugsweise jeweils eine den inspizierten Bedruckstoff 09 abbildende Optik auf, z. B. ein Linsensystem, wobei eine optische Achse dieser jeweiligen Optik z. B. in einer den Bedruckstoff 09 in seiner Symmetrielinie 24 orthogonal schneidenden Ebene liegt. Die jeweilige optische Achse der jeweiligen Optik korrespondiert vorzugsweise mit dem jeweiligen Zentralstrahl 21; 22 der jeweiligen Kamera 03; 23 (Fig. 2). Eine Gruppenbildung von einzelnen Lichtquellen 071 bis 077 und/oder 081 bis 087 kann vorzugsweise symmetrisch auch hinsichtlich der jeweiligen optischen Achse der jeweiligen Optik von derjenigen Kamera 03; 23 erfolgen, die von diesen gruppierten einzelnen Lichtquellen 071 bis 077 und/oder 081 bis 087 emittiertes Licht erfasst.

Eine Variante in der Ansteuerung der einzelnen Lichtquellen 071 bis 077 und/oder 081 bis 087 kann vorsehen, am Beleuchtungssystem 06 beteiligte Linienbeleuchtungen 07; 08 sehr individuell an das Reflexionsverhalten der zu beleuchtenden Oberflächen des Bedruckstoffes 09 und/oder an andere Details des Inspektionssystems 01 anzupassen, sodass auch unsymmetrische Beleuchtungssituationen eingestellt sein können. Je nach dem Reflexionsverhalten der zu beleuchtenden Oberfläche, insbesondere der Oberfläche des Bedruckstoffes 09, und/oder gewissen Details des Inspektionssystems 01 kann hinsichtlich der zu inspizierenden Oberfläche entweder eine randbetonte oder eine mittenbetonte Einstellung vorteilhaft sein (Fig. 4). Eine randbetonte Einstellung kann z. B. dann von Vorteil sein, wenn als abbildende Optik zumindest für eine der Kameras 03; 23 ein Weitwinkelobjektiv mit einem physikalisch unvermeidbaren Randabfall zum Einsatz kommt und/oder wenn zumindest eine der Linienbeleuchtungen 07; 08 einen winkelabhängigen Intensitätsverlauf ihres jeweiligen Lichtaustritts aufweist.

Im Ergebnis lässt sich mit den von der Steuereinheit 04 steuerbaren Lichtquellen 07; 08 des Beleuchtungssystems 06 ohne Vornahme von mechanischen Veränderungen am Inspektionssystem 01 ein an das jeweilige Reflexionsverhalten der zu inspizierenden Oberfläche des Bedruckstoffes 09 bedarfsgerecht anpassbares Beleuchtungsprofil vorzugsweise sowohl in Transportrichtung T des Bedruckstoffes 09 als auch quer dazu einstellen, wobei die Steuereinheit 04 die Lichtquellen 07; 08 des Beleuchtungssystems 06 z. B. auch zwischen zwei aufeinanderfolgenden von der jeweiligen Zeilenkamera 03; 23 aufgenommenen Bildzeilen umschalten kann, um während des Durchlaufs des Bedruckstoffes 09 durch den Erfassungsbereich 11 der Kameras 03; 23 Teilbilder jeweils unter verschiedenen Beleuchtungssituationen aufzunehmen, wodurch Oberflächenbereiche des Bedruckstoffes 09 mit ganz unterschiedlichen reflektiven Eigenschaften inspizierbar gemacht werden können. Die Teilbilder, die von dem Kamerasystem 02 unter verschiedenen Beleuchtungssituationen erfasst wurden, können in ihrer Summe die Oberfläche des Bedruckstoffes 09 vollständig abbilden.

Mit der Einstellbarkeit der Lichtquellen 07; 08 des Beleuchtungssystems 06 lässt sich über die gesamte Breite der Bildaufnahme, die sich bis Breite B des Bedruckstoffes 09 erstrecken kann, ein gleichmäßigerer Signalpegel hinsichtlich des remittierten Lichtes einstellen, wodurch bei den Kameras 03; 23 ein Nutzsignal-/Rauschverhältnis und auch ein Signalabstand zwischen Merkmalen unterschiedlicher reflektiver Eigenschaften verbessert wird. In der mit dem Inspektionssystem 01 vorgenommenen Bildaufnahme sind somit Aufnahmen mit einer gleichmäßigeren Bildeigenschaft erzeugbar, die eine verbesserte Grundlage zur Beurteilung der Qualität des Druckproduktes bilden.

### Bezugszeichenliste

- 01: Inspektionssystem
- 02: optische Einrichtung, Kamerasystem
- 03: Kamera, Farbkamera, Halbleiterkamera, Zeilenkamera
- 04: Steuereinheit
- 05: -
- 06: Beleuchtungssystem
- 07: Lichtquellen, Linienbeleuchtung
071 Lichtquelle
072 Lichtquelle
073 Lichtquelle
074 Lichtquelle
075 Lichtquelle
076 Lichtquelle
077 Lichtquelle
- 08: Lichtquellen, Linienbeleuchtung
081 Lichtquelle
082 Lichtquelle
083 Lichtquelle
084 Lichtquelle
085 Lichtquelle
086 Lichtquelle
087 Lichtquelle
- 09: Bedruckstoff, Bogen, Materialbahn, Papierbahn
- 10: -
- 11: Erfassungsbereich
- 12: Zentralstrahl
- 13: Zentralstrahl
- 14: Einfallslot
- 15: -
- 16: Druckmaschine, Rotationsdruckmaschine, Bogendruckmaschine
- 17: Fußtritt
- 18: Zylinder, Druckwerkzylinder, Gegendruckzylinder
- 19: Öffnung
- 20: -
- 21: Zentralstrahl
- 22: Zentralstrahl
- 23: Kamera, Zeilenkamera, Farbzeilenkamera
- 24: Symmetrielinie

- A02: Abstand
- A06: Abstand

- A: Abstand
- B: Breite
- I: Intensität
- T: Bewegungsrichtung, Transportrichtung

- α: Einfallswinkel
- β: Einfallswinkel
- γ: Winkel
- δ: Beobachtungswinkel
- ε: Beobachtungswinkel

## Patentansprüche

1. Vorrichtung zur Inspektion einer Oberfläche, wobei ein Inspektionssystem (01) mit einer optischen Einrichtung (02) zur Aufnahme des von der zu inspizierenden Oberfläche reflektierten Lichts und mit einem mindestens zwei Lichtquellen (07; 08) aufweisenden Beleuchtungssystem (06) vorgesehen ist, wobei die optische Einrichtung (02) und das Beleuchtungssystem (06) mit einer Steuereinheit (04) verbunden sind, wobei die Lichtquellen (07; 08) in einem Abstand (A) voneinander beabstandet angeordnet sind, wobei die Lichtquellen (07; 08) jeweils Licht in einen an der zu inspizierenden Oberfläche vorgesehenen Erfassungsbereich (11) der optischen Einrichtung (02) emittieren, wobei die optische Einrichtung (02) auf die zu inspizierende Oberfläche gerichtet ist, wobei mindestens eine der im Abstand (A) voneinander angeordneten Lichtquellen (07; 08) des Beleuchtungssystems (06) jeweils in mehrere einzelne Lichtquellen (071 bis 077 und/oder 081 bis 087) unterteilt ist, wobei der Erfassungsbereich (11) der optischen Einrichtung (02) in einer Bewegungsebene der relativ zu dem Inspektionssystem (01) durch diesen Erfassungsbereich (11) hindurchbewegten zu inspizierenden Oberfläche liegt, wobei sich der Abstand (A) der Lichtquellen (07; 08) des Beleuchtungssystems (06) in der Bewegungsrichtung (T) der zu inspizierenden Oberfläche erstreckt, wobei die einzelnen Lichtquellen (071 bis 077 und/oder 081 bis 087) von mindestens einer dieser Lichtquellen (07; 08) quer zur Bewegungsrichtung (T) der zu inspizierenden Oberfläche angeordnet sind, **dadurch gekennzeichnet, dass** die Steuereinheit (04) mindestens zwei der im Abstand (A) voneinander angeordneten Lichtquellen (07; 08) des Beleuchtungssystems (06) und die einzelnen Lichtquellen (071 bis 077 und 081 bis 087) von mindestens einer der im Abstand (A) voneinander angeordneten Lichtquellen (07; 08) jeweils wahlweise und unabhängig voneinander ansteuert, wobei die Steuereinheit (04) mit den steuerbaren Lichtquellen (07; 08) des Beleuchtungssystems (06) ein an das jeweilige Reflexionsverhalten der zu inspizierenden Oberfläche anpassbares Beleuchtungsprofil sowohl in Transportrichtung (T) dieser Oberfläche als auch quer dazu einstellt.

2. Vorrichtung nach Anspruch 1, **dadurch gekennzeichnet, dass** die Lichtquellen (07; 08) unter sich voneinander unterscheidenden Einfallswinkeln (α; β) Licht in den Erfassungsbereich (11) der optischen Einrichtung (02) emittieren.

3. Vorrichtung nach Anspruch 1, **dadurch gekennzeichnet, dass** die optische Einrichtung (02) unter einem Beobachtungswinkel (δ; ε) auf die zu inspizierende Oberfläche gerichtet ist.

4. Vorrichtung nach Anspruch 2 oder 3, **dadurch gekennzeichnet, dass** die Einfallswinkel (α; β) und/oder der Beobachtungswinkel (δ; ε) jeweils ausgehend von einem lotrecht auf der zu inspizierenden Oberfläche stehenden Einfallslot (14) spitzwinklig ausgebildet sind.

5. Vorrichtung nach Anspruch 1, **dadurch gekennzeichnet, dass** die Steuereinheit (04) mit mindestens zwei sich im Einfallswinkel (α; β) unterscheidenden Lichtquellen (07; 08) im Erfassungsbereich (11) mindestens zwei sich unterscheidende Beleuchtungssituationen einstellt.

6. Vorrichtung nach Anspruch 1, **dadurch gekennzeichnet, dass** die Steuereinheit (04) mit ihrer Ansteuerung der Lichtquellen (07; 08) deren Einschaltzeitpunkt und/oder deren Einschaltdauer und/oder deren jeweilige Helligkeit einstellt.

7. Vorrichtung nach Anspruch 6, **dadurch gekennzeichnet, dass** die Steuereinheit (04) den jeweiligen Einschaltzeitpunkt und die jeweilige Einschaltdauer mindestens einer der Lichtquellen (07; 08) selektiv hinsichtlich eines bestimmten zu erfassenden Motivs oder eines bestimmten zu erfassenden besonderen Merkmals der zu inspizierenden Oberfläche einstellt.

8. Vorrichtung nach Anspruch 1, **dadurch gekennzeichnet, dass** die Steuereinheit (04) den Einschaltzeitpunkt der Lichtquellen (07; 08) in Abhängigkeit von einer Bewegungsgeschwindigkeit der zu inspizierenden Oberfläche einstellt.

9. Vorrichtung nach Anspruch 1, **dadurch gekennzeichnet, dass** die Lichtquellen (07; 08) des Beleuchtungssystems (06) als Leuchtdioden oder als Laserdioden ausgebildet sind.

10. Vorrichtung nach Anspruch 1, **dadurch gekennzeichnet, dass** die optische Einrichtung (02) zur Aufnahme des von der zu inspizierenden Oberfläche reflektierten Lichts als ein mindestens eine Kamera (03; 23) aufweisendes Kamerasystem (02) ausgebildet ist.

11. Vorrichtung nach Anspruch 10, **dadurch gekennzeichnet, dass** die mindestens eine Kamera (03; 23) des Kamerasystems (02) als eine Zeilenkamera (03; 23) ausgebildet ist.

12. Vorrichtung nach Anspruch 10, **dadurch gekennzeichnet, dass** das Kamerasystem (02) mindestens zwei Kameras (03; 23) mit sich jeweils voneinander unterscheidenden Beobachtungswinkeln (δ, ε) aufweist.

13. Vorrichtung nach Anspruch 10, **dadurch gekennzeichnet, dass** die Steuereinheit (04) für zwei aufeinanderfolgende, von mindestens einer der Kameras (03; 23) aufgenommene Bildzeilen die Lichtquellen (07; 08) des Beleuchtungssystems (06) auf zwei sich unterscheidende Beleuchtungssituationen einstellt.

14. Vorrichtung nach Anspruch 11, **dadurch gekennzeichnet, dass** Schaltzeiten der Lichtquellen (07; 08) des Beleuchtungssystems (06) kürzer sind als ein Zeilentakt der mindestens einen Kamera (03; 23).

15. Vorrichtung nach Anspruch 1, **dadurch gekennzeichnet, dass** die Steuereinheit (04) mindestens zwei sich im Einfallswinkel (α; β) unterscheidende Lichtquellen (07; 08) nacheinander sowohl ein- als auch wieder ausschaltet, bevor die zu inspizierende Oberfläche in ihrer Bewegungsrichtung (T) eine Strecke zurückgelegt hat, die der halben Erstreckung des Erfassungsbereiches (11) in der Bewegungsrichtung (T) der zu inspizierenden Oberfläche entspricht.

16. Vorrichtung nach Anspruch 11, **dadurch gekennzeichnet, dass** die mindestens eine Kamera (03; 23) einen Zeilentakt aufweist, der mindestens so hoch ist, dass eine mit der Erstreckung des Erfassungsbereiches (11) korrespondierende Bildzeile dieser Kamera (03; 23) in der Zeit des Durchlaufs eines von der Kamera (03; 23) zu erfassenden Ausschnittes der zu inspizierenden Oberfläche durch den Erfassungsbereich (11) mindestens zweimal auslesbar ist.

17. Vorrichtung nach Anspruch 11, 15 oder 16, **dadurch gekennzeichnet, dass** die Steuereinheit (04) jeweils unter unterschiedlichen Beleuchtungssituationen mit der Kamera (03; 23) in deren Erfassungsbereich (11) gemachte Aufnahmen hinsichtlich sich in ihrem jeweiligen Reflexionsverhalten unterscheidender Merkmale der zu inspizierenden Oberfläche auswertet.

18. Vorrichtung nach Anspruch 1, **dadurch gekennzeichnet, dass** die Steuereinheit (04) jede der einzelnen Lichtquellen (071 bis 077 und/oder 081 bis 087) zumindest in ihrer jeweiligen Helligkeit einstellt.

19. Vorrichtung nach Anspruch 1, **dadurch gekennzeichnet, dass** eine Anzahl einzelner Lichtquellen (071 bis 077 und/oder 081 bis 087) zu einer Gruppe zusammengefasst ist, wobei die Steuereinheit (04) gruppenweise zusammengefasste einzelne Lichtquellen (071 bis 077 und/oder 081 bis 087) gemeinsam ansteuert.

20. Vorrichtung nach Anspruch 1, **dadurch gekennzeichnet, dass** mehrere der Lichtquellen (07; 08) des Beleuchtungssystems (06) quer zur Bewegungsrichtung (T) der zu inspizierenden Oberfläche jeweils in mehrere, von der Steuereinheit (04) einzeln ansteuerbare Lichtquellen (071 bis 077 und/oder 081 bis 087) unterteilt sind.

21. Vorrichtung nach Anspruch 1, **dadurch gekennzeichnet, dass** die einzelnen Lichtquellen (071 bis 077 und/oder 081 bis 087) jeweils zur Ausbildung einer Linienbeleuchtung (07; 08) aneinandergereiht sind.

22. Vorrichtung nach Anspruch 1, **dadurch gekennzeichnet, dass** die Steuereinheit (04) die einzelnen Lichtquellen (071 bis 077 und/oder 081 bis 087) der jeweiligen Linienbeleuchtung (07; 08) zur Ausbildung eines hinsichtlich der zu inspizierenden Oberfläche entweder randbetonten oder eines mittenbetonten Lichtprofils einstellt.

23. Vorrichtung nach Anspruch 1, **dadurch gekennzeichnet, dass** die zu inspizierende Oberfläche eine Oberfläche eines Bedruckstoffes (09) ist.

24. Vorrichtung nach Anspruch 23, **dadurch gekennzeichnet, dass** die im Erfassungsbereich (11) der optischen Einrichtung (02) liegende Bewegungsebene der zu inspizierenden Oberfläche eine Transportebene des relativ zu dem Inspektionssystem (01) durch diesen Erfassungsbereich (11) hindurchbewegten Bedruckstoffes (09) ist.

25. Vorrichtung nach Anspruch 23, **dadurch gekennzeichnet, dass** sich der Bedruckstoff (09) im Fall seiner bogenförmigen Ausgestaltung mit einer Transportgeschwindigkeit von 18.000 Bogen pro Stunde oder im Fall seiner bahnförmigen Ausgestaltung mit einer Transportgeschwindigkeit von 12 m/s oder mit einer jeweils noch höheren Transportgeschwindigkeit durch den Erfassungsbereich (11) der optischen Einrichtung (02) hindurchbewegt.

26. Vorrichtung nach Anspruch 23, **dadurch gekennzeichnet, dass** der Bedruckstoff (09) uneinheitlich reflektive Bereiche aufweist.

27. Vorrichtung nach Anspruch 23, **dadurch gekennzeichnet, dass** sich mindestens eine der Linienbeleuchtungen (07; 08) zumindest über eine gesamte Breite (B) des Bedruckstoffes (09) erstreckt.

28. Vorrichtung nach Anspruch 23, **dadurch gekennzeichnet, dass** sich der Abstand (A) der Lichtquellen (07; 08) des Beleuchtungssystems (06) in Transportrichtung (T) des Bedruckstoffes (09) erstreckt, wobei die einzelnen Lichtquellen (071 bis 077 und/oder 081 bis 087) von mindestens einer dieser Lichtquellen (07; 08) quer zur Transportrichtung (T) des Bedruckstoffes (09) angeordnet sind.

29. Vorrichtung nach Anspruch 23, **dadurch gekennzeichnet, dass** die einzelnen Lichtquellen (071 bis 077 und/oder 081 bis 087) der jeweiligen Linienbeleuchtung (07; 08) hinsichtlich einer den Bedruckstoff (09) in dessen Transportrichtung (T) durchlaufenden Symmetrielinie (24) jeweils symmetrisch angeordnet sind.

30. Vorrichtung nach Anspruch 23, **dadurch gekennzeichnet, dass** die Linienbeleuchtungen (07; 08) quer zur Transportrichtung (T) des Bedruckstoffes (09) eine sich voneinander unterscheidende Anzahl von einzelnen Lichtquellen (071 bis 077 und/oder 081 bis 087) aufweisen.

31. Vorrichtung nach Anspruch 29, **dadurch gekennzeichnet, dass** die Steuereinheit (04) zu beiden Seiten der Symmetrielinie (24) symmetrisch angeordnete einzelne Lichtquellen (071 bis 077 und/oder 081 bis 087) jeweils auf dieselbe Intensität (I) einstellt.

32. Vorrichtung nach einem oder mehreren der Ansprüche 1 bis 31, **dadurch gekennzeichnet, dass** sie in einer Druckmaschine (16) angeordnet ist.

33. Vorrichtung nach Anspruch 32, **dadurch gekennzeichnet, dass** die Steuereinheit (04) den Einschaltzeitpunkt der Lichtquellen (07; 08) in Abhängigkeit von einer Winkellage eines den Bedruckstoff (09) in der Druckmaschine (16) transportierenden Zylinders (18) einstellt.

## Claims

1. An apparatus for inspecting a surface, wherein an inspection system (01) with an optical device (02) for recording the light reflected from the surface to be inspected and with an illumination system (06) comprising at least two light sources (07; 08) is provided, wherein the optical device (02) and the illumination system (06) are connected to a control unit (04), wherein the light sources (07; 08) are arranged spaced from each other at a distance (A), wherein the light sources (07; 08) in each case emit light in a detection range (11) of the optical device (02) provided on the surface to be inspected, wherein the optical device (02) is directed towards the surface to be inspected, wherein at least one of the light sources (07; 08) of the illumination system (06) arranged at the distance (A) from each other is subdivided in each case into a plurality of individual light sources (071 to 077 and/or 081 to 087), wherein the detection range (11) of the optical device (02) is situated in a movement plane of the surface to be inspected which is moved relative to the inspection system (01) through the said detection range (11), wherein the distance (A) between the light sources (07; 08) of the illumination system (06) extends in the direction of movement (T) of the surface to be inspected, wherein the individual light sources (071 to 077 and/or 081 to 087) of at least one of the said light sources (07; 08) are arranged transversely to the direction of movement (T) of the surface to be inspected, **characterized in that** the control unit (04) actuates in a selective manner and independently of each other in each case at least two of the light sources (07; 08) of the illumination system (06) arranged at the distance (A) from each other and the individual light sources (071 to 077 and 081 to 087) of at least one of the light sources (07; 08) arranged at the distance (A) from each other, wherein the control unit (04) together with the controllable light sources (07; 08) of the illumination system (06) sets an illumination profile capable of being adapted to the respective reflecting behaviour of the surface to be inspected, both in the conveying direction (T) of the said surface and transversely to it.

2. An apparatus according to Claim 1, **characterized in that** the light sources (07; 08) emit light into the detection range (11) of the optical device (02) at angles of incidence (α; β) which differ from each other.

3. An apparatus according to Claim 1, **characterized in that** the optical device (02) is directed towards the surface to be inspected at an angle of observation (δ; ε).

4. An apparatus according to Claim 2 or 3, **characterized in that** the angle of incidence (α; β) and/or the angle of observation (δ; ε) are formed at an acute angle in each case starting from a perpendicular of incidence (14) situated at a right angle to the surface to be inspected.

5. An apparatus according to Claim 1, **characterized in that** with at least two light sources (07; 08) which differ in the angle of incidence (α; β) in the detection range (11) the control unit (04) sets at least two illumination situations which differ from each other.

6. An apparatus according to Claim 1, **characterized in that** with its actuation of the light sources (07; 08) the control unit (04) sets the switch-on time thereof and/or the switch-on duration thereof and/or the respective brightness thereof.

7. An apparatus according to Claim 6, **characterized in that** the control unit (04) sets the respective switch-on time and the respective switch-on duration of at least one of the light sources (07; 08) in a selective manner with respect to a specified motif to be detected or a specified special feature - to be detected - of the surface to be inspected.

8. An apparatus according to Claim 1, **characterized in that** the control unit (04) sets the switch-on time of the light sources (07; 08) in a manner dependent upon a speed of movement of the surface to be inspected.

9. An apparatus according to Claim 1, **characterized in that** the light sources (07; 08) of the illumination system (06) are constructed in the form of luminous diodes or in the form of laser diodes.

10. An apparatus according to Claim 1, **characterized in that** the optical device (02) for recording the light reflected by the surface to be inspected is constructed in the form of a camera system (02) comprising at least one camera (03; 23).

11. An apparatus according to Claim 10, **characterized in that** the at least one camera (03; 23) of the camera system (02) is constructed in the form of a line camera (03; 23).

12. An apparatus according to Claim 10, **characterized in that** the camera system (02) comprises at least two cameras (03; 23) with angles of observation (δ; ε) which differ from each other in each case.

13. An apparatus according to Claim 10, **characterized in that** the control unit (04) for two successive image lines recorded by at least one of the cameras (03; 23) sets the light sources (07; 08) of the illumination system (06) to two illumination systems which differ from each other.

14. An apparatus according to Claim 11, **characterized in that** switching times of the light sources (07; 08) of the illumination system (06) are shorter than a line clock of the at least one camera (03; 23).

15. An apparatus according to Claim 1, **characterized in that** the control unit (04) both switches on and switches off again in succession at least two light sources (07; 08) which differ in the angle of incidence (α; β), before the surface to be inspected has covered in its direction of movement (T) a path which corresponds to half the extension of the detection range (11) in the direction of movement (T) of the surface to be inspected.

16. An apparatus according to Claim 11, **characterized in that** the at least one camera (03; 23) has a line clock which is at least so high that an image line of the said camera (03; 23) corresponding to the extension of the detection range (11) is capable of being read out at least twice by the detection range (11) in the duration of the passage of a portion - to be detected by the camera (03; 23) - of the surface to be inspected.

17. An apparatus according to Claim 11, 15 or 16, **characterized in that** the control unit (04) evaluates recordings made in different illumination situations in each case with the camera (03; 23) in the detection range (11) thereof with respect to features - differing in their respective reflecting behaviour - of the surface to be inspected.

18. An apparatus according to Claim 1, **characterized in that** the control unit (04) sets each of the individual light sources (071 to 077 and/or 081 to 087) at least in their respective brightness.

19. An apparatus according to Claim 1, **characterized in that** a number of individual light sources (071 to 077 and/or 081 to 087) are combined to form a group, wherein the control unit (04) jointly actuates individual light sources (071 to 077 and/or 081 to 087) combined group-wise.

20. An apparatus according to Claim 1, **characterized in that** a plurality of the light sources (07; 08) of the illumination system (06) are subdivided in each case transversely to the direction of movement (T) of the surface to be inspected into a plurality of light sources (071 to 077 and/or 081 to 087) capable of being actuated individually by the control unit (04).

21. An apparatus according to Claim 1, **characterized in that** the individual light sources (071 to 077 and/or 081 to 087) are arranged in a row adjacent to one another in each case in order to form a line illumination (07; 08).

22. An apparatus according to Claim 1, **characterized in that** the control unit (04) sets the individual light sources (071 to 077 and/or 081 to 087) of the individual line illumination (07; 08) in order to form a light profile which is either highlighted at the edge or highlighted in the middle with respect to the surface to be inspected.

23. An apparatus according to Claim 1, **characterized in that** the surface to be inspected is a surface of a material to be printed (09).

24. An apparatus according to Claim 23, **characterized in that** the plane of movement - situated in the detection range (11) of the optical device (02) - of the surface to be inspected is a conveying plane of the material to be printed (09) moved through the said detection range (11) relative to the inspection system (01).

25. An apparatus according to Claim 23, **characterized in that**, in the case where the material to be printed (09) is provided in the form of sheets with a conveying speed of 18,000 sheets per hour or in the case where the material to be printed (09) is provided in the form of a web with a conveying speed of 12 m/s or at a still higher conveying speed in each case, the said material to be printed (09) moves through the detection range (11) of the optical device (02).

26. An apparatus according to Claim 23, **characterized in that** the material to be printed (09) has non-uniformly reflecting regions.

27. An apparatus according to Claim 23, **characterized in that** at least one of the line illuminations (07; 08) extends at least over an entire width (B) of the material to be printed (09).

28. An apparatus according to Claim 23, **characterized in that** the distance (A) between the light sources (07; 08) of the illumination system (06) extends in the conveying direction (T) of the material to be printed (09), wherein the individual light sources (071 to 077 and/or 081 to 087) of at least one of the said light sources (07; 08) are arranged transversely to the conveying direction (T) of the material to be printed (09).

29. An apparatus according to Claim 23, **characterized in that** the individual light sources (071 to 077 and/or 081 to 087) of the respective line illumination (07; 08) are arranged symmetrically in each case with respect to a line of symmetry (24) extending through the material to be printed (09) in the conveying direction (T) thereof.

30. An apparatus according to Claim 23, **characterized in that** transversely to the conveying direction (T) of the material to be printed (09) the line illuminations (07; 08) have a mutually differing number of individual light sources (071 to 077 and/or 081 to 087).

31. An apparatus according to Claim 29, **characterized in that** the control unit (04) sets individual light sources (071 to 077 and/or 081 to 087) arranged symmetrically on both sides of the line of symmetry (24) to the same intensity (I) in each case.

32. An apparatus according to one or more of Claims 1 to 31, **characterized in that** it is arranged in a printing press (16).

33. An apparatus according to Claim 32, **characterized in that** the control unit (04) sets the switch-on point of the light sources (07; 08) in a manner dependent upon an angular position of a cylinder (18) conveying the material to be printed (09) in the printing press (16).

## Revendications

1. Dispositif pour inspecter une surface, un système d'inspection (01), équipé d'un dispositif optique (02) pour enregistrer la lumière réfléchie par la surface à inspecter et muni d'un système d'éclairage (06), présentant au moins deux sources lumineuses (07 ; 08) étant prévu, le dispositif optique (02) et le système d'éclairage (06) étant reliés à une unité de commande (04), les sources lumineuses (07 ; 08) étant disposées de façon espacée l'une de l'autre, d'une distance d'espacement (A), les sources lumineuses (07 ; 08) émettant chacune de la lumière dans une zone de détection (11), prévue sur la surface à inspecter, du dispositif optique (02), le dispositif optique (02) étant pointé sur la surface à inspecter, au moins l'une des sources lumineuses (07 ; 08), disposées à une distance d'espacement (A) l'une de l'autre, du système d'éclairage (06) étant chaque fois subdivisé en plusieurs sources lumineuses (071 à 077 et/ou 081 à 087), la zone de détection (11) du dispositif optique (02) étant située dans un plan de déplacement de la surface à inspecter déplacée par rapport au système d'inspection (01), à travers cette zone de détection (11), la distance d'espacement (A) des sources lumineuses (07 ; 08) du système d'éclairage (06) s'étendant dans la direction de déplacement (T) de la surface à inspecter, les différentes sources lumineuses (071 à 077 et/ou 081 à 087) d'au moins l'une de ces sources lumineuses (07 ; 08) étant disposées transversalement par rapport à la direction de déplacement (T) de la surface à inspecter, **caractérisé en ce que** l'unité de commande (04) commande, chaque fois au choix et indépendamment les unes des autres, au moins deux des sources lumineuses (07 ; 08), disposée à une distance d'espacement (A) l'une de l'autre, du système d'éclairage (06), et les différentes sources lumineuses (071 à 077 et/ou 081 à 087) d'au moins l'une de ces sources lumineuses (07 ; 08), disposées à une distance d'espacement (A) l'une de l'autre, l'unité de commande (04), avec les sources lumineuses (07 ; 08), susceptibles d'être commandées, du système d'éclairage (06) réglant un profil d'éclairage, adaptable au comportement en réflexion respectif de la surface à inspecter, tant dans la direction de transport (T) de cette surface, qu'également transversalement par rapport à celle-ci.

2. Dispositif selon la revendication 1, **caractérisé en ce que** les sources lumineuses (07 ; 08) émettent, sous des angles d'incidence (α ; β) différents les uns des autres, de la lumière dans la zone de détection (11) du dispositif optique (02).

3. Dispositif selon la revendication 1, **caractérisé en ce que** le dispositif optique (02) est pointé sur la surface à inspecter, sous un angle d'observation (δ ; ε).

4. Dispositif selon la revendication 2 ou 3, **caractérisé en ce que** l'angle d'incidence (α ; β) et/ou l'angle d'observation (δ ; ε) sont chacun des angles aigus, en partant d'une verticale sur la surface à inspecter.

5. Dispositif selon la revendication 1, **caractérisé en ce que** l'unité de commande (04), équipée d'au moins deux sources lumineuses (07 ; 08), dont l'angle d'incidence (α ; β) est différent, règle dans la zone de détection (11) au moins deux situations d'éclairage différentes.

6. Dispositif selon la revendication 1, **caractérisé en ce que** l'unité de commande (04), avec sa commande des sources lumineuses (07 ; 08), règle leur moment de mise en service et/ou leur durée de mise en service et/ou leur luminosité respective.

7. Dispositif selon la revendication 6, **caractérisé en ce que** l'unité de commande (04) règle le moment de mise en service respectif et la durée de mise en service respective d'une des sources lumineuses (07 ; 08), de façon sélective eu égard à un motif déterminé à détecter ou à une caractéristique particulière à détecter, déterminée, de la surface à inspecter.

8. Dispositif selon la revendication 1, **caractérisé en ce que** l'unité de commande (04) règle le moment de mise en service des sources lumineuses (07 ; 08), en fonction d'une vitesse de déplacement de la surface à inspecter.

9. Dispositif selon la revendication 1, **caractérisé en ce que** les sources lumineuses (07 ; 08) du système d'éclairage (06) sont réalisées sous forme de diodes photoémettrices ou de diodes laser.

10. Dispositif selon la revendication 1, **caractérisé en ce que** le dispositif optique (02) pour enregistrer la lumière réfléchie par la surface à inspecter est réalisé sous forme d'un système de caméra (02), présentant au moins une caméra (03 ; 23).

11. Dispositif selon la revendication 10, **caractérisé en ce que** la au moins une caméra (03 ; 23) du système de caméra (02) est réalisée sous forme de caméra à lignes (03 ; 23).

12. Dispositif selon la revendication 10, **caractérisé en ce que** le système de caméra (02) présente au moins deux caméras (03 ; 23), ayant des angles d'observation (δ ; ε) différents les uns des autres.

13. Dispositif selon la revendication 10, **caractérisé en ce que** l'unité de commande (04), pour deux lignes d'image successives, enregistrées par au moins l'une des caméras (03 ; 23), règle les sources lumineuses (07 ; 08) du système d'éclairage (06) à deux situations d'éclairage différentes.

14. Dispositif selon la revendication 11, **caractérisé en ce que** les temps de commutation des sources lumineuses (07 ; 08) du système d'éclairage (06) sont plus courts qu'un cycle de ligne de la au moins une caméra (03 ; 23).

15. Dispositif selon la revendication 1, **caractérisé en ce que** l'unité de commande (04) procède tant à la mise en service, qu'également de nouveau à la mise hors service, l'une après l'autre, d'au moins deux sources lumineuses (07 ; 08) à angles d'incidence (α ; β) différents, avant que la surface à inspecter ait parcouru, dans sa direction de transport (T), une distance correspondant à la moitié de l'étendue de la zone de détection (11), dans la direction de déplacement (T) de la surface à inspecter.

16. Dispositif selon la revendication 11, **caractérisé en ce que** la au moins une caméra (03 ; 23) présente un cycle de ligne au moins aussi élevé pour qu'une ligne d'image, correspondant à l'étendue de la zone de détection (11), de cette caméra (03 ; 23) puisse être lue au moins deux fois dans la durée du passage par la zone de détection (11) d'une partie, à détecter par la caméra (03 ; 23), de la surface à inspecter.

17. Dispositif selon la revendication 11, 15 ou 16, **caractérisé en ce que** l'unité de commande (04) évalue chaque fois, dans des situations d'éclairage différentes, avec la caméra (03 ; 23), des enregistrements effectués dans sa zone de détection (11), au égard à des caractéristiques, se distinguant quant à leur comportement en réflexion respectif, de la surface à inspecter.

18. Dispositif selon la revendication 1, **caractérisé en ce que** l'unité de commande (04) règle au moins la luminosité respective des différentes sources lumineuses (071 à 077 et/ou 081 à 087).

19. Dispositif selon la revendication 1, **caractérisé en ce qu'**un nombre de sources lumineuses (071 à 077 et/ou 081 à 087) individuelles sont rassemblées en un groupe, l'unité de commande (04) commandant conjointement des sources lumineuses (071 à 077 et/ou 081 à 087) individuelles, rassemblées en un groupe.

20. Dispositif selon la revendication 1, **caractérisé en ce que** plusieurs des sources lumineuses (07 ; 08) du système d'éclairage (06) sont subdivisées, transversalement par rapport à la direction de déplacement (T) de la surface à inspecter, chaque fois en plusieurs sources lumineuses (071 à 077 et/ou 081 à 087), susceptibles d'être commandées individuellement par l'unité de commande (04).

21. Dispositif selon la revendication 1, **caractérisé en ce que** les différentes sources lumineuses (071 à 077 et/ou 081 à 087) sont chaque fois alignées les uns les autres en rangées, pour former un éclairage en ligne (07 ; 08).

22. Dispositif selon la revendication 1, **caractérisé en ce que** l'unité de commande (04) règle les différentes sources lumineuses (071 à 077 et/ou 081 à 087) de l'éclairage en ligne (07 ; 08) respectif, pour former un profil lumineux soit à accentuation des bords, soit à accentuation du centre, eu égard à la surface à inspecter.

23. Dispositif selon la revendication 1, **caractérisé en ce que** la surface à inspecter est une surface d'un matériau à imprimer (09).

24. Dispositif selon la revendication 23, **caractérisé en ce que** le plan de déplacement, situé dans la zone de détection (11) du dispositif optique (02), de la surface à inspecter est un plan de transport du matériau à imprimer (09) passé par cette zone de détection (11), par rapport au système d'inspection (01).

25. Dispositif selon la revendication 23, **caractérisé en ce que** le matériau à imprimer (09), dans le cas où il se présente sous forme de feuilles, passe, à une vitesse de transport de 18.000 feuilles par heure ou, dans le cas où il se présente sous forme de bande, passe à une vitesse de transport de 12 m/s, ou à une vitesse de transport chaque fois encore plus élevée, par la zone de détection (11) du dispositif optique (02).

26. Dispositif selon la revendication 23, **caractérisé en ce que** le matériau à imprimer (09) présente des zones de réflexion non uniformes.

27. Dispositif selon la revendication 23, **caractérisé en ce qu'**au moins l'un des éclairages en ligne (07 ; 08) s'étend au moins sur toute la largeur (B) du matériau à imprimer (09).

28. Dispositif selon la revendication 23, **caractérisé en ce que** la distance d'espacement (A) des sources lumineuses (07 ; 08) du système d'éclairage (06) s'étend dans la direction de transport (T) du matériau à imprimer (09), les différentes sources lumineuses (071 à 077 et/ou 081 à 087) d'au moins l'une de ces sources lumineuses (07 ; 08) étant disposée transversalement par rapport à la direction de transport (T) du matériau à imprimer (09).

29. Dispositif selon la revendication 23, **caractérisé en ce que** les différentes sources lumineuses (071 à 077 et/ou 081 à 087) de l'éclairage en ligne (07 ; 08) respectif étant disposées chaque fois symétriquement par rapport à un axe de symétrie (24) parcourant le matériau à imprimer (09) dans sa direction de transport (T).

30. Dispositif selon la revendication 23, **caractérisé en ce que** les éclairages en ligne (07 ; 08) présentent, transversalement par rapport à la direction de transport (T) du matériau à imprimer (09), un nombre, différent les uns des autres, de sources lumineuses (071 à 077 et/ou 081 à 087) individuelles.

31. Dispositif selon la revendication 29, **caractérisé en ce que** l'unité de commande (04) règle chaque fois à la même intensité (1) les différentes sources lumineuses (071 à 077 et/ou 081 à 087) disposées symétriquement des deux côtés de l'axe de symétrie (24).

32. Dispositif selon l'une ou plusieurs des revendications 1 à 31, **caractérisé en ce qu'**il est disposé dans une machine à imprimer (16).

33. Dispositif selon la revendication 32, **caractérisé en ce que** l'unité de commande (04) règle le moment de mise en service des sources lumineuses (07 ; 08), en fonction d'une position angulaire d'un cylindre (18) transportant le matériau à imprimer (09) dans la machine à imprimer (16).
